# EUROPEAN PATENT APPLICATION

(11) **EP 4 174 349 A1**
(43) Date of publication of application: **03.05.2023**
(21) Application number: 20943087.5
(22) Date of filing: 24.12.2020
(51) Int. Cl.: F16K 31/06

(54) **LOAD HOLDING VALVE AND HYDRAULIC CONTROL SYSTEM**

(30) Priority: 30.06.2020 CN 202010617548
(71) Applicant: Weichai Power Co., Ltd., Weifang, Shandong 261061 (CN); Linde Hydraulics (China) Co., Ltd., Weifang, Shandong 261061 (CN)
(72) Inventor: REN, Jian, Weifang, Shandong 261061 (CN); BAO, Yujuan, Weifang, Shandong 261061 (CN); WANG, Zhi, Weifang, Shandong 261061 (CN); WU, Shaoze, Weifang, Shandong 261061 (CN); DONG, Zhaosheng, Weifang, Shandong 261061 (CN); LIU, Zhizheng, Weifang, Shandong 261061 (CN)
(74) Representative: Pfenning, Meinig & Partner mbB
(86) International application number: PCT/CN2020/138889
(87) International publication number: WO 2022/001032

(57) **Abstract**

Provided are a load holding valve including a valve body (10), a main valve core (20), a pilot valve core (30), and an electromagnetic assembly (41, 42, 43, 44). The valve body (10) is provided with an oil return port (11) and a working device oil port (12) capable of communicating with each other. The main valve core (20) is disposed in the valve body. A first end of the main valve core is capable of sealing a communication channel between the oil return port and the working device oil port. A second end of the main valve core is provided with a cavity (21). The main valve core is provided with a first orifice (22) communicating the oil return port with the cavity, and a second orifice (23) communicating the working device oil port with the cavity. The area of the first orifice is greater than the area of the second orifice. The pilot valve core (30) is disposed in the valve body and at least partially located in the cavity. A first end of the pilot valve core is capable of sealing the first orifice. The electromagnetic assembly (41, 42, 43, 44) is connected to a second end of the pilot valve core and configured to control the pilot valve core to seal or open the first orifice. A hydraulic control system including the load holding valve is also provided.

## Description

This application claims priority to Chinese Patent Application No. 202010617548.6 filed on June 30, 2020, the disclosure of which is incorporated herein by reference in its entirety.

### TECHNICAL FIELD

The present application relates to the technical field of hydraulic control, for example, a load holding valve and a hydraulic control system.

### BACKGROUND

In the field of construction machinery, the load holding control valve plays an important role. In normal operation, the load holding control valve needs to satisfy a two-way through-flow capability. In other words, in forward operation, the oil can directly open the valve port to pass through, while in reverse operation, the valve port needs to be opened by controlling the pressure to allow the oil to pass through, and when the operation is stopped, the oil path is cut off to realize the pressure holding function behind the valve port. The existing design structure basically adopts the split structure design for both the pilot stage and the main stage, because each component needs to work in cooperation with each other, and the flow passage connecting different components needs to be designed in the process of designing the valve body. The structure design of the valve body is relatively complex, and the oil passage is also relatively complex.

### SUMMARY

The present application provides a load holding valve and a hydraulic control system, which can deal with complex valve body structures and oil passages.

An embodiment provides a load holding valve. The load holding valve includes a valve body, a main valve core, a pilot valve core, and an electromagnetic assembly.

The valve body is provided with an oil return port and a working device oil port capable of communicating with each other.

A main valve core is disposed in the valve body. A first end of the main valve core is capable of sealing a communication channel between the oil return port and the working device oil port. A second end of the main valve core is provided with a cavity. The main valve core is provided with a first orifice communicating the oil return port with the cavity, and a second orifice communicating the working device oil port with the cavity. The area of the first orifice is greater than the area of the second orifice.

A pilot valve core is disposed in the valve body and at least partially located in the cavity. A first end of the pilot valve core is capable of sealing the first orifice.

The electromagnetic assembly is connected to a second end of the pilot valve core and configured to control the pilot valve core to seal or open the first orifice.

An embodiment provides a hydraulic control system. The hydraulic control system includes the load holding valve described above.

### BRIEF DESCRIPTION OF DRAWINGS

FIG. 1 is a diagram illustrating the structure of a load holding valve according to an embodiment of the present application.
FIG. 2 is a diagram of a load holding valve in forward operation according to an embodiment of the present application.
FIG. 3 is a diagram of a load holding valve that is in reverse operation and whose electromagnetic assembly is energized according to an embodiment of the present application.
FIG. 4 is a diagram of a load holding valve that is in reverse operation and whose electromagnetic assembly is de-energized according to an embodiment of the present application.

### Reference list

- 10: valve body
- 11: oil return port
- 12: working device oil port
- 20: main valve core
- 21: cavity
- 22: first orifice
- 23: second orifice
- 24: first guide hole
- 25: second guide hole
- 30: pilot valve core
- 41: iron core
- 411: limiting post
- 42: armature
- 43: spring
- 44: electromagnetic coil

### DETAILED DESCRIPTION

In the description of embodiments of the present application, unless otherwise expressly specified and limited, a term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, specific meanings of the preceding terms in embodiments of the present application may be understood based on specific situations.

In embodiments of the present application, unless otherwise expressly specified and limited, when a first feature is described as "on" or "below" a second feature, the first feature and the second feature may be in direct contact, or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the present application, it should be noted that orientations or position relations indicated by terms such as "above", "below", "right" and the like are based on orientations or position relations shown in the drawings. These orientations or position relations are intended only to facilitate and simplify the operation, and not to indicate or imply that a device or element referred to must have such specific orientations or must be configured or operated in such specific orientations. Thus, these orientations or position relations are not to be construed as limiting embodiments of the present application. In addition, terms "first" and "second" are used only to distinguish between descriptions and have no special meaning.

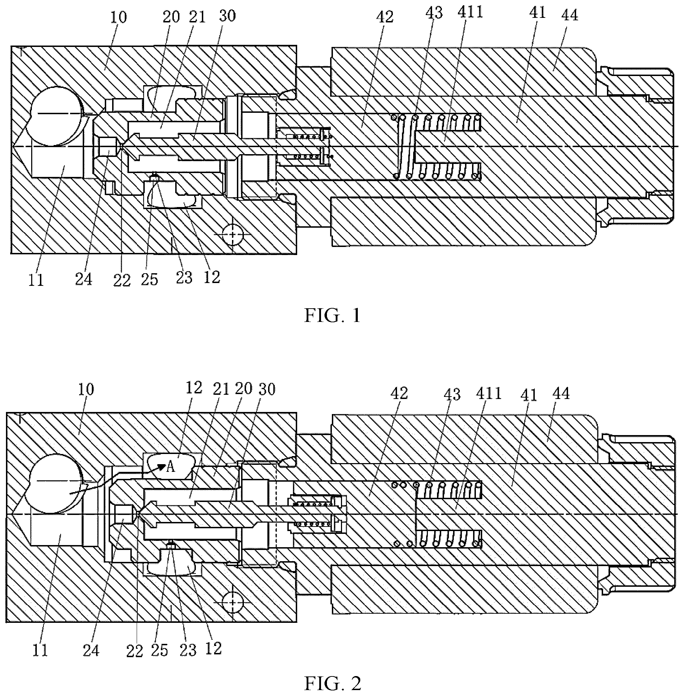

In FIG. 1, an embodiment of the present application provides a load holding valve including a valve body 10, a main valve core 20, a pilot valve core 30, and an electromagnetic assembly. The valve body 10 is provided with an oil return port 11 and a working device oil port 12 capable of communicating with each other. The main valve core 20 is disposed in the valve body 10. A first end of the main valve core 20 is capable of sealing a communication channel between the oil return port 11 and the working device oil port 12. A second end of the main valve core 20 is provided with a cavity 21. The main valve core 20 is provided with a first orifice 22 communicating the oil return port 11 with the cavity 21, and a second orifice 23 communicating the working device oil port 12 with the cavity 21. The area of the first orifice 22 is greater than the area of the second orifice 23. A pilot valve core 30 is disposed in the valve body 10 and at least partially located in the cavity 21. A first end of the pilot valve core 30 is capable of sealing the first orifice 22. An electromagnetic assembly is connected to a second end of the pilot valve core 30 and configured to control the pilot valve core 30 to seal or open the first orifice 22. By integrating the main valve core 20 and the pilot valve core 30, the structure is simplified, the number of components is reduced, and the arrangement of oil passages between different components is avoided, thereby reducing the processing cost. In addition, the overall structure is made more compact by providing the cavity 21 on the main valve core 20 and configuring the pilot valve core 30 to be in the cavity 21 of the main valve core 20.

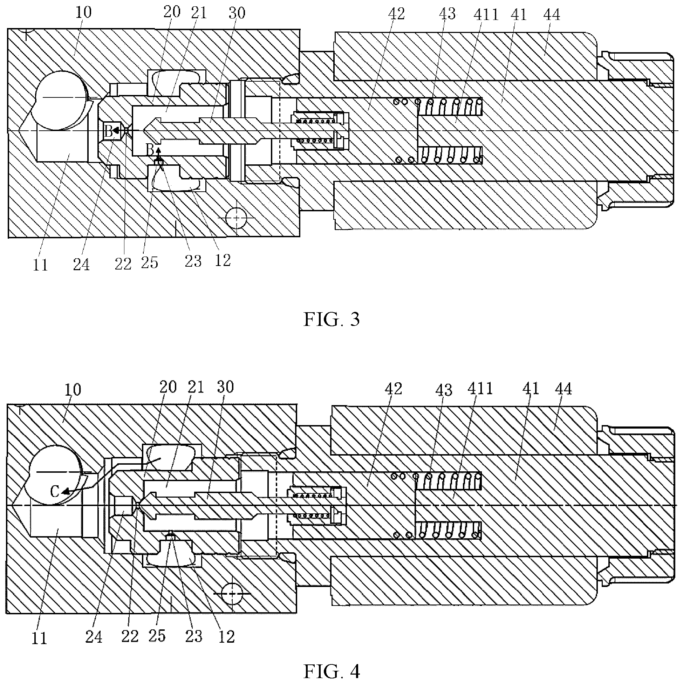

With reference to FIG. 2, when the load holding valve is in forward operation, the oil return port 11 is connected to the oil inlet, and the high-pressure oil in the oil return port 11 directly pushes the main valve core 20 to move to the right to open the communication channel between the oil return port 11 and the working port oil port 12 so that the oil enters the working device oil port 12 and then leads to the working device. Arrow A in FIG. 2 shows the direction of oil flow. When the load holding valve is in reverse operation, the working device makes the oil flow from the working device oil port 12 to the oil return port 11 under the action of gravity. At this time, the oil return port 11 communicates with the returning oil, the electromagnetic assembly is energized, the pilot valve core 30 opens the first orifice 22 under the action of the electromagnetic assembly, and the working device oil port 12 communicates with the oil return port 11 through the second orifice 23 and the first orifice 22 (see the direction indicated by the arrow B in FIG. 3). Since the area of the first orifice 22 is greater than that of the second orifice 23, the main valve core 20 moves to the right under the action of the pressure difference, and the working device oil port 12 is directly connected to the oil return port 11 (see the direction indicated by the arrow C in FIG. 4) so that the oil in the working device oil port 12 returns to the oil through the oil return port 11. When the load holding valve is stationary, the electromagnetic assembly is de-energized, and the pilot valve core 30 is in the position of sealing the first orifice 22. The oil of the working device oil port 12 flows into the cavity 21 of the main valve core 20 through the second orifice 23, and the main valve core 20 is in the position of sealing the oil return port 11 and the working device oil port 12 under the action of the oil so that the oil of the working device oil port 12 cannot return oil through the oil return port 11, thereby achieving the effect of pressure holding. See FIG. 1.

The electromagnetic assembly includes an electromagnetic coil 44, an iron core 41, an armature 42, and a spring 43. The iron core 41 is disposed in the electromagnetic coil 44. The armature 42 is slidably disposed in the iron core 41. A first end of the armature 42 is connected to the pilot valve core 30. The spring 43 is disposed between a second end of the armature 42 and the iron core 41. When the electromagnetic coil 41 is energized, the generated magnetic field drives the pilot valve core 30 to move right through the armature 42, the armature 42 compresses the spring 43, the pilot valve core 30 opens the first orifice 22, and the oil return port 11 communicates with the cavity 21 of the main valve core 20. When the electromagnetic coil 41 is de-energized, the magnetic field attracting the armature 42 disappears, the armature 42 moves left with the pilot valve core 30 under the restoring force of the spring 43, and the pilot valve core 30 closes the first orifice 22. Optionally, a limiting post 411 is in the iron core 41. When the electromagnetic coil 41 is energized to move the armature 42 to the right, the limiting post 411 can limit the distance travelled by the armature 42 moving to the right. Optionally, the spring 43 is sleeved on the limiting post 411 so that the armature 42 is limited and the installation of the spring 43 is facilitated.

The main valve core 20, the first orifice 22 and the pilot valve core 30 are arranged coaxially so that the structural arrangement is more compact and reasonable.

A first end surface of the main valve core 20 is a conical surface, so is a first end surface of the pilot valve core 30, which improves the sealing performance of the main valve core 20 and the pilot valve core 30.

The main valve core 20 is provided with a first guide hole 24 communicating with the first orifice 22. The diameter of the first guide hole 24 is greater than the diameter of the first orifice 22. The first guide hole 24 is disposed on a side of the first orifice 22 facing the oil return port 11. The main valve core 20 is provided with a second guide hole 25 communicating with the second orifice 23. The diameter of the second guide hole 25 is greater than the diameter of the second orifice 23. The second guide hole 25 is disposed on a side of the second orifice 23 facing the working device oil port 12. In this manner, the first orifice 22 and the second orifice 23 can not only achieve the purpose of throttling, but also ensure the smooth flow of the oil.

A hydraulic control system includes the load holding valve in the above solution, which simplifies the structure of the hydraulic control system and the arrangement of oil passages.

## Claims

1. A load holding valve, comprising:
a valve body (10) provided with an oil return port (11) and a working device oil port (12) capable of communicating with each other;
a main valve core (20) disposed in the valve body (10), wherein a first end of the main valve core (20) is capable of sealing a communication channel between the oil return port (11) and the working device oil port (12), a second end of the main valve core (20) is provided with a cavity (21), the main valve core (20) is provided with a first orifice (22) communicating the oil return port (11) with the cavity ( 21), and a second orifice (23) communicating the working device oil port (12) with the cavity (21), and an area of the first orifice (22) is greater than an area of the second orifice (23);
a pilot valve core (30) disposed in the valve body (10) and at least partially located in the cavity (21), wherein a first end of the pilot valve core (30) is capable of sealing the first orifice (22); and
an electromagnetic assembly (41, 42, 43, 44) connected to a second end of the pilot valve core (30), wherein the electromagnetic assembly (41, 42, 43, 44) is configured to control the pilot valve core (30 ) to seal or open the first orifice (22).

2. The load holding valve according to claim 1, wherein a first end surface of the main valve core (20) is a conical surface.

3. The load holding valve according to claim 1, wherein a first end surface of the pilot valve core (30) is a conical surface.

4. The load holding valve according to claim 1, wherein the main valve core (20) is provided with a first guide hole (24) communicating with the first orifice (22), a diameter of the first guide hole (24) is greater than a diameter of the first orifice (22), and the first guide hole (24) is disposed on a side of the first orifice (22) facing the oil return port (11).

5. The load holding valve according to claim 1, wherein the main valve core (20) is provided with a second guide hole (25) communicating with the second orifice (23), a diameter of the second guide hole (25) is greater than a diameter of the second orifice (23), and the second guide hole (25) is disposed on a side of the second orifice (23) facing the working device oil port (12).

6. The load holding valve according to claim 1, wherein the main valve core (20), the first orifice (22), and the pilot valve core (30) are arranged coaxially.

7. The load holding valve according to any one of claims 1 to 6, wherein the electromagnetic assembly (41, 42, 43, 44) comprises an electromagnetic coil (44), an iron core (41), an armature (42), and a spring (43), wherein the iron core (41) is disposed in the electromagnetic coil (44), the armature (42) is slidably disposed in the iron core (41), a first end of the armature (42) is connected to the pilot valve core (30), and the spring (43) is disposed between a second end of the armature (42) and the iron core (41).

8. The load holding valve according to claim 7, wherein a limiting post (411) is disposed inside the iron core (41), and the limiting post (411) is configured to limit a distance travelled by the armature (42) driving the pilot valve core (30) back.

9. The load holding valve according to claim 8, wherein the spring (43) is sleeved on the limiting post (411).

10. A hydraulic control system, comprising the load holding valve according to any one of claims 1 to 9.
